# EUROPEAN PATENT SPECIFICATION

(11) **EP 3 613 974 B1**
(45) Date of publication and mention of the grant of the patent: **30.10.2024**
(21) Application number: 19190965.4
(22) Date of filing: 09.08.2019
(51) Int. Cl.: F02D 41/22, G01C 21/34, B60W 40/09, G01C 21/36, G07C 5/08, B60R 16/023, B60W 50/00, B60W 50/14, G07C 5/00

(54) **METHOD AND SYSTEM FOR DETERMINING AND MONITORING A CAUSE OF EXTRA-FUEL CONSUMPTION**
VERFAHREN UND SYSTEM ZUR DETEKTION UND ÜBERWACHUNG EINER URSACHE FÜR ZUSÄTZLICHEN KRAFTSTOFFVERBRAUCH
PROCÉDÉ ET SYSTÈME PERMETTANT DE DÉTERMINER ET DE SURVEILLER UNE CAUSE D'UNE SURCONSOMMATION DE CARBURANT

(30) Priority: 22.08.2018 IT 201800008155
(43) Date of publication of application: 26.02.2020
(73) Proprietor: Iveco S.p.A., 10156 Torino (IT)
(72) Inventor: CONICELLA, Fabrizio, 10129 TORINO (IT); TRENTUNO, Simone, 10040 LEINÌ (TO) (IT)
(74) Representative: Studio Torta S.p.A.

(56) References cited:
- JP-B2- 4 262 260
- KR-A- 20120 061 683
- US-A1- 2010 010 732
- US-A1- 2011 208 428
- US-A1- 2015 149 069

## Description

### Scope of the invention

The present invention relates to a method for determining a cause of extra fuel consumption. Causes of extra consumption can be both external, that is to say linked to the driving behaviour, and internal, that is to say linked to a fault in the vehicle.

### State of the art

EP3168102 shows a method and a system for evaluating a driving style of a vehicle driver.
The evaluation of the driving style helps the driver to moderate certain driving habits that greatly affect the consumption of a vehicle and consequently the harmful emissions in the environment. Therefore, devices and methods for conveying feedback to the driver in order to discourage incorrect driving styles have already been developed.

These are also methods that allow fuel consumption evaluation as in "Application of artificial neural network to predict specific fuel consumption and exhaust temperature for a Diesel engine" Adnan Parlak, Yasar Islamoglu, Halit Yasar, Aysun Egrisogut - Applied Thermal engineering - www.sciencedirect.com, or in "A comparative study on data segregation for mesoscopic energy Modeling" Weixia Li, Guoyuan Wu, Yi Zhang, Matthew J. Barth -Transportation Research Part D 50 (2017) 70 - 82.

These algorithms are aimed at proposing models for estimating the fuel consumed in relation to the type of approach used both in terms of data segregation and in relation to the model used.

The purpose of these documents is therefore to provide tools for a better estimate of fuel consumption.

It is believed that the current situation can be improved in order to give more complete feedback to the driver and the fleet operator.

Unless specifically excluded in the following detailed description, what is described in this chapter is to be considered as an integral part of the detailed description. US-A-2015/149069 discloses a method for monitoring an extra-fuel consumption and for determining an extra-fuel consumption of a terrestrial vehicle, according to the preamble of claim 1.

US-A-2011/0208428 discloses a navigation apparatus, which displays an own-vehicle driving condition without making it difficult to view a map display. The navigation apparatus includes own-vehicle location determination means that determines a location of an own vehicle; a map database having map data recorded therein; vehicle data acquisition means that acquires vehicle data; a displaying means that displays on the map data an own-vehicle mark indicating the location of the own-vehicle; and data processing means that determines a driving condition using the vehicle data, to thereby vary the own vehicle mark, wherein the vehicle driving condition is represented by means of the own vehicle mark.

US-A-2010/0010732 discloses a method of planning a vehicle route includes estimating fuel requirements of identified alternative routes or route segments using navigation, vehicle, and powertrain information. The method also includes displaying for a vehicle operator a list of alternate routes that features either absolute or relative values representative of such estimated fuel requirements.

The method further includes adapting values used to estimate fuel requirements based upon current powertrain operating parameters, and alerting the vehicle operator when actual vehicle fuel economy along a selected route varies significantly from the estimated fuel requirement.

KR-A-2012/0061683 discloses a route setting device of a navigation system with a fuel consumption amount calculating member, a fuel consumption amount measuring member, a time calculation member, and a control member. The fuel consumption amount calculating member calculates an expected fuel consumption amount per each node on a route from a starting location to a destination location. The fuel consumption amount measuring member measures an actual fuel consumption amount actually consumed when a vehicle moves until an arbitrary node. The time calculating member calculates an expected arrival time, a necessary time required for reaching to the arbitrary node, a value of subtracting the necessary time from the expected arrival time, an expected arrival time from the arbitrary node to the destination location. The control member sets the route again based on traffic information at an arbitrary node when a difference between the actual fuel consumption amount and expected fuel consumption amount is exceeded over a first critical value. If the difference is not exceeded the first critical value, the route is set again based on real time traffic information at the arbitrary node.

JP-B-4262260 discloses a diagnosis device of the internal combustion engine is equipped with an adjustment device for adjusting a combustion state, and a correction device for correcting at least one of a throttle opening, a fuel injection pulse width, fuel injection timing, ignition timing, and an exhaust gas recirculation amount by estimating or detecting input or output of the internal combustion engine. The diagnosis device of the internal combustion engine is further equipped with a recording device for recording a correction amount of the correction device for each of the predetermined time, and a fuel consumption evaluation means for evaluating the fuel consumption of the internal combustion engine based on the recorded data recorded in the recording device or the history of the recorded data.

### Summary of the invention

The object of the present invention is to propose a method for detecting a cause of extra-fuel consumption, which allows the feedback given to the driver to be improved.

The underlying idea of the present invention is to
- acquire at least a first set of input parameters related to environmental and mission conditions, a second set of input parameters related to vehicle specifications and at least a third set of input parameters related to a vehicle driving style,
- estimate an expected fuel consumption based on said first, second and third set of input parameters, - compare, in real time, said expected fuel consumption with a measured fuel consumption, thereby obtaining an error value; when said error value increases abruptly, a flag indicating a first condition of extra-fuel consumption is then activated.

In other words, when the derivative of the error exceeds a first predetermined threshold, said flag is activated.

Therefore, the monitoring step returns an indicator when this flag is active.

Obviously, the method can be executed continuously and said flag can be deactivated when said error is lower than a second predetermined threshold.

Thus, a fourth set of input parameters related to stored records relating to events concerning abnormalities and variations in the operating conditions of the engine and/or vehicle is acquired, and if records are present, the instant of memorization of each of said records is compared with said activation of said first flag in order to interrelate the memorized abnormality (abnormalities) or variation (variations) of use conditions with the increase in consumption error.

The expression "environmental and mission conditions" refers to those conditions in which the vehicle is operated. The most significant environmental and mission characteristics include the load transported, the ambient temperature and the meteorological conditions in general, the road elevation changes, and the traffic conditions that affect the derived quantities, such as the average speed of the vehicle, the commercial speed, i.e. calculated net of stop conditions, the number of stops, etc.

"Vehicle specifications" means those features identifying the characteristics of the vehicle when it is placed on the market or following significant changes. These specifications include, at least: the axle ratio, the engine model, the type of gearbox, the presence of an aerodynamic kit, the presence of a cab heater, the presence of an intarder, the size of the tires.

The vehicle "driving style" means those conditions under which the vehicle is used by the driver, both negative and positive accelerations applied to the vehicle, the frequency of use of the brakes, the use of the cruise control, the optional use of the Stop & Start, etc.

The parameters relating to the vehicle driving style may also include the driving score obtained by the driver by means of an evaluation method known per se, such as for example in EP3168102.

The recorded events include the DTC (Diagnostic trouble code) error messages relating to the engine and/or the vehicle, which are generally posted in the vehicle data network and stored in the engine control processing unit and/or the vehicle control processing unit, if present. These events also include, among others, the detection of an exceedance of a minimum tyre pressure threshold, a disconnection and reconnection of the trailer, an activation of a power take-off (PTO).

The extra-fuel consumption can be easily attributed to the most likely of the one or more anomalies recorded.

Preferably, a percentage change in consumption due to the aforementioned likely anomaly is also calculated and reported to the driver by means of a special "alert" generated automatically, for example, through the vehicle's on-board computer.

For example, an extra fuel consumption may be due to a clogged air filter or particulate filter, which increases engine pumping losses. For example, an event that can bring about extra consumption may be caused by a trailer having a significant misalignment of the axles or one or more flat tyres. Therefore, it is advantageous to record as an event, not only any DTC, but also a trailer replacement.

The load variations due to different loads carried by two trailers that alternate on the same tractor are discriminated by the calculation of the total mass of the vehicle which is obtained from devices known per se, such as for example the EBS (Electronic Brake System) so as to avoid false positives. Preferably, anomalies recorded outside a predetermined time and/or kilometric range preceding the activation of said first flag are excluded from the comparison.

In other words, the longer the time or the distance between the recording of an event and the activation of the aforementioned flag, the lower the correlation between this event and the extra-consumption detected, therefore, it is advantageous to filter the older records (in terms of time and/or distance in kilometres).

According to a preferred variant of the invention, a predefined fifth set of input parameters related to an ideal use of the vehicle is acquired.

By substituting at least one of the input parameters of the fifth set for a corresponding input parameter of the third set of parameters, an extra fuel consumption related to the vehicle driving style is estimated. When the third set of parameters also includes the aforementioned driving style score, this can also be replaced with the ideal value included in the fifth set of parameters.

Advantageously, it is possible to calculate an extra-fuel consumption due to a non-ideal style of use of the vehicle, and this extra-consumption is preferably shown in percentage terms to the driver, for example by means of the vehicle's on-board computer, or can be made available at a special internet URL. This information turns out to be much more persuasive than showing a simple score.

### Brief description of the figures

Further objects and advantages of the present invention will be apparent from the following detailed description of an embodiment thereof (and variants thereof) and from the accompanying drawings given purely by way of non-limiting example, wherein:
Figure 1 shows a flow chart of a first embodiment of the present invention which provides the monitoring and an example of determination of a cause of extra-consumption;
Figure 2 shows a flow chart of a second embodiment of the present invention which provides the monitoring and determination of the cause of extra-consumption according to a further procedure which can be performed in parallel with the procedure of Figure 1;
Figure 3 shows a network architecture which implements the present invention;
Figure 4 shows a report relating to a system for monitoring and determining the causes of extra-fuel consumption by a fleet of vehicles according to the flow chart of Figures 1 and 2.

In the flow chart, the dashed blocks are optional.

The same reference numbers and letters in the figures identify the same elements or components.

In the context of the present description the term "second" component does not imply the presence of a "first" component. These terms are in fact used as tags to improve clarity and should not be understood in a limiting way.

The elements and features disclosed in the various preferred embodiments, including the drawings, may be combined with one another without however departing from the scope of protection of the present application as described below.

### Detailed description of embodiments

The method object of the present invention can be carried out in a continuous manner.

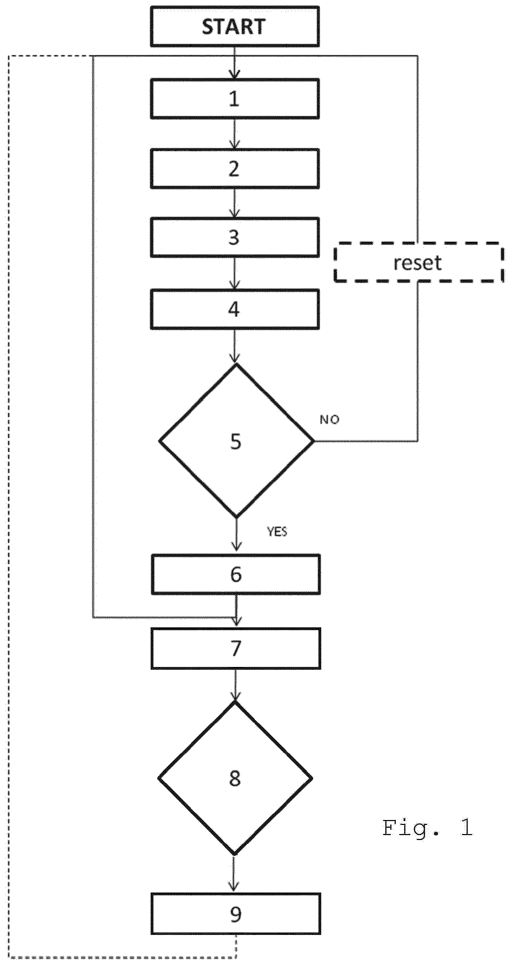

With reference to Figure 1, at least the following steps are performed:
1. A first acquisition of at least
   . a first set of input parameters related to environmental and mission conditions,
   . a second set of input parameters related to vehicle specifications and
   . a third set of input parameters related to a vehicle driving style,
2. An estimate of a first expected fuel consumption in time, based on said first, second and third set of input parameters,
3. A second acquisition of a measured fuel consumption in time,
4. A comparison, preferably in real time, of said expected fuel consumption with said measured fuel consumption, thereby obtaining an error value in time,
5. Checking: whether said error value increases abruptly (5 = Yes), if so
6. Activation of a flag indicating an extra-fuel consumption condition.

In other words, when the derivative of the error exceeds a first predetermined threshold, said flag is activated.

Therefore, the monitoring step returns a sort of alert when said flag is active.

This alert can be shown to the driver to report a consumption anomaly and/or can be used for other uses as described below. Preferably, the system, when the flag is switched to the active mode, can calculate the percentage offset between the expected consumption and the measured consumption, quantifying it in terms of percentages or in terms of litres/100km and preferably showing it to the driver in the form of an appropriate report.

When the monitoring method is performed continuously, then, if at the end of the verification the error value is not found to increase suddenly (5 = no), and at the same time the error is less than a second threshold

Reset. Said flag is deactivated and the procedure starts again from the beginning, otherwise it starts again from the beginning without deactivating said flag.

In other words, to reset the flag to zero, not only the derivative of the error must become approximately zero, evidently passing through a negative trend, but also the error itself must fall within a certain tolerance identified by the aforementioned second threshold. Said second threshold can be set or calculated, for example through a self-learning algorithm which receives both the measured consumption and the estimated consumption as input data.

Preferably, the estimate of the expected consumption is also performed with a self-learning algorithm and therefore, in this case, the second threshold can be defined as a predefined fixed guard value, for example +/- 0.5%. This guard threshold essentially serves to take into account imponderables that cannot be computed in the expected consumption calculation.

According to the present invention, in addition to the monitoring alone, a procedure is carried out for identifying the cause that led to the sudden increase in said error.

Therefore, the following additional steps are performed:
7. Acquisition of a fourth set of input parameters related to stored records relating to events concerning abnormalities and variations in the operating conditions of the engine and/or vehicle,
8. If at least one record is present,
9. Check: the instant of memorization of said record (of each of said records) is compared with said activation of said first flag so as to identify a causal link between the memorized abnormality (abnormalities) or variation (variations) of use conditions and the increase in consumption error; in other words, the event that most likely generated the extra fuel consumption is identified.

In this case, too, the step 9 may include the step of showing the driver a notice message, which includes an extra-fuel consumption value expressed either in percentages or in terms of litres/100 km.

In this case, too, the flag is deactivated when said error does not increase any more and its value returns below said second predetermined threshold.

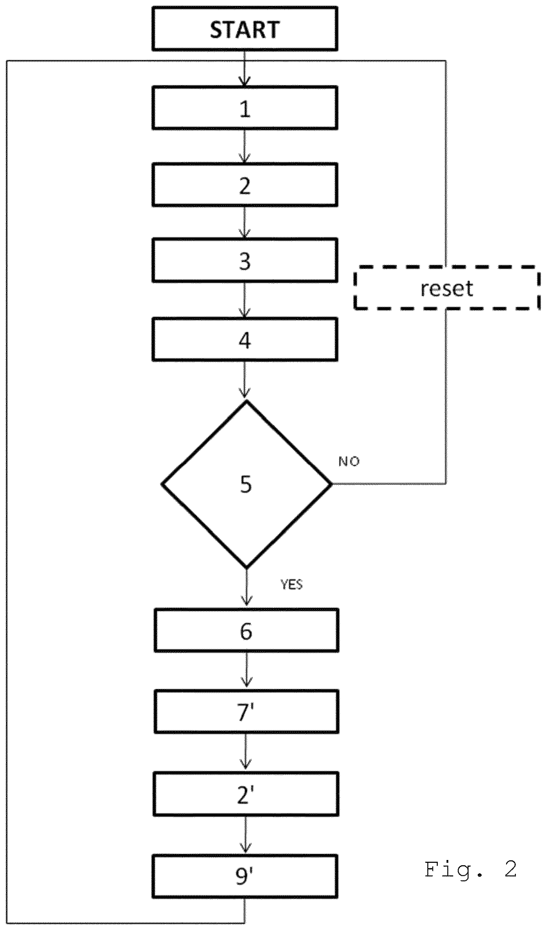

Figure 2 shows a flow chart that shares the steps 1 to 6 of the chart in Figure 1 in order to carry out a further procedure for identifying the cause that brought about said sudden error increase consequent to an incorrect vehicle use.

Therefore, the following additional steps are performed:
7'. Acquisition of a fifth set of input parameters related to an ideal vehicle use;
2'. An estimate of a second expected fuel consumption in time, based on said first, second and fifth set of input parameters;
9'. Execution of a comparison between said first and said second expected fuel consumption and if there is an offset greater than a predetermined threshold, then a cause of extra-fuel consumption is identified as an incorrect vehicle use; step 9' may include the step of showing the driver a notice message, which includes an extra-fuel consumption value expressed either in percentages or in terms of litres/100 km, which includes an indication on the incorrect driving style.

In this case, too, the flag is deactivated when said error does not increase any more and its value returns below said second predetermined threshold.

Since the driving style can be based on several aspects:
- average time of use of the cruise control,
- driving style score,
- both positive and negative accelerations of the vehicle,
- the frequency of use of the brakes,
- the use of the Stop&Start, etc.
it is thus possible to substitute one at a time the ideal parameters of the fifth set of data for the third set of data in order to evaluate the incidence of each of the aforementioned aspects, showing the driver a message that helps him/her, in a targeted way, to correct his/her vehicle driving style.

The aforementioned two procedures for determining the causes of extra-consumption, which are based on the monitoring procedure with steps 1 to 6, can be performed in parallel, giving a realistic picture of the situation.

Preferably, in order to calculate the expected consumption, an interpolating polynomial known as "Bayesian ridge" is constructed, which consists of a linear regression.

This polynomial is the basis of a self-learning algorithm.

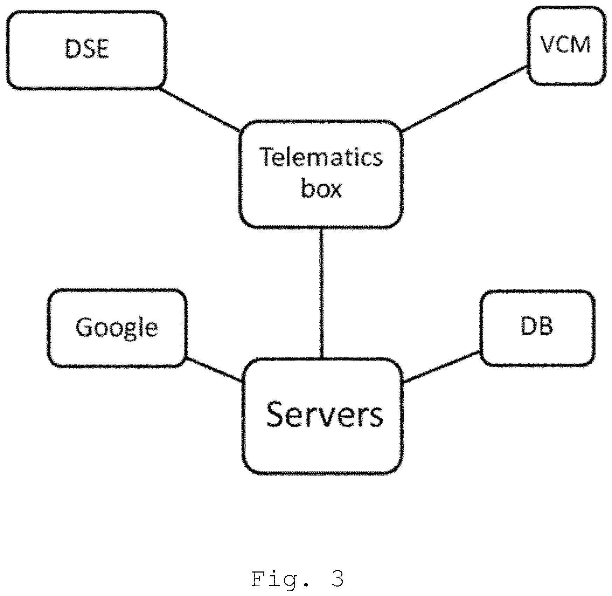

Figure 3 shows an example of a network architecture adapted to implement the present method.

The DSE, VCM and Telematic Box components are installed on board the vehicle.

The DSE (Driving Style Evaluation) is an on-board device or a program that can be executed by an on-board computer of the vehicle, through which a score of the driver's driving style is calculated based on some parameters acquired in real time.

Preferably, the DSE performs all the steps of claim 1 in EP3168102.

The DSE is preferably connected to a display arranged in the instrument panel of the vehicle in order to give feedback to the driver on his/her driving style.

The VCM (Vehicle control module) consists of a processing unit connected to a vehicular network and supervises the vehicle's functions. This processing unit receives information from all on-board devices and systems, including the S&S system, cruise control, brakes, GPS system, driving assistance systems, and from the engine control processing unit generally referred to as ECU (Engine Control Unit).

Preferably, the software defining the aforementioned DSE runs in the VCM.

The VCM is able to communicate through a so-called Telematic Box with a set of servers managed by a monitoring body. The monitoring body may be the vehicle manufacturer or a vehicle fleet manager.

Vehicles do not necessarily have to be produced by the same manufacturer, what matters is that the VCM is able to transfer to the Servers at least some of the information needed to calculate the aforementioned expected fuel consumption.

Based on the position of the vehicle, the Servers are able to acquire the topology of the area and the type of area (urban, extra-urban) in which each individual vehicle moves, to estimate fuel consumption even taking into account elevation changes. Generally, Google Maps^{™} provides this information which is therefore freely accessible.

Other computers known per se are able to provide information on the meteorological conditions of the same area in which each individual vehicle moves, and possibly also the traffic conditions.

All the aforementioned information substantially forms said first set of input parameters.

The servers are also programmed to acquire information about the characteristics of the vehicle, such as the model, engine size, etc.

Instead, the third set of parameters is provided by the aforementioned Telematic box.

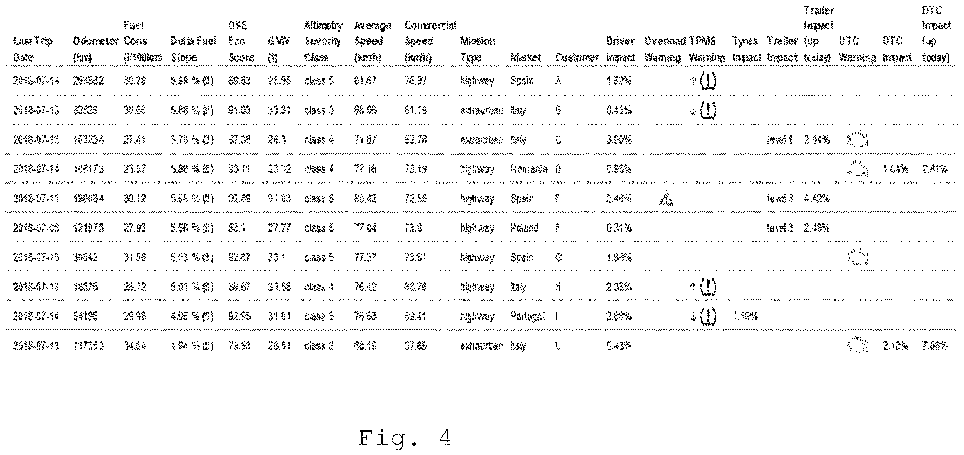

Figure 4 shows an example of a screenshot provided on a group of vehicles subjected to the method object of the present invention.

The third column shows the measured fuel consumption acquired by the servers from the individual VCUs of the respective vehicles.

The column immediately to the right is the "Data Fuel Slope" column which is marked with the symbol (!!!) since the error between the measured consumption and the estimated consumption has a slope, i.e. a variation, exceeding a predetermined threshold.

Immediately to the right is the "DSE ECO Score" column, which shows the score calculated by the DSE.

Further to the right is the "Altimetry Severity Class" column, which shows the topology class of the area in which the vehicle moves. The topologies are preferably categorized in relation to the characteristics of the roads, which essentially depend on the elevation changes and conformation of the road.

Then, there is additional information such as "Average Speed" and "Commercial speed", i.e. the average speed net of stops. "Mission Type", i.e. the type of mission that depends on the type of road travelled.

The "Driver Impact" column shows the extra fuel consumption due to a sub-optimal vehicle driving style. This percentage value is calculated following the flow chart in Figure 2.

The following columns show alerts regarding the vehicle load conditions (Overload Warning), the pressure of the tyres (TPMS Warning), the impact on the trailer, and finally the various possible DTC errors described above.

According to the present invention, the system is able to calculate the impact of a DTC malfunction event on fuel consumption according to the flow chart of Figure 1 and shows it in percentage terms.

The last column on the right shows the percentage of extra fuel consumption interrelated with a recorded anomaly/malfunction event. When no value is indicated in this column, this means that any anomaly detected and indicated in the "DTC Warning" column did not produce a significant increase in consumption.

The present invention can be advantageously carried out by means of a computer program comprising coding means for performing one or more steps of the method, when this program is run on a computer. It is therefore understood that the scope of protection covers said computer program and also computer readable means that comprise a recorded message, said computer readable means comprising program code means for performing one or more steps of the method, when said program is run on a computer.

Alternative embodiments of the non-limiting example described above are possible, without thereby departing from the scope of protection of the present invention as defined by the appended claims.

The person skilled in the art is able to achieve the object of the invention from the aforesaid description without introducing further construction details.

## Claims

1. A method for monitoring an extra-fuel consumption and for determining a cause of an extra-fuel consumption of a terrestrial vehicle, in particular a commercial or industrial vehicle, comprising at least the following steps in succession:
- (Step 1) a first acquisition of at least
. a first set of input parameters related to environmental and mission conditions,
. a second set of input parameters related to vehicle specifications and
. a third set of input parameters related to a vehicle driving style;
said vehicle "driving style" meaning those conditions under which the vehicle is used by the driver, both negative and positive accelerations applied to the vehicle, the frequency of use of the brakes, the use of the cruise control, the optional use of the Stop & Start;
- (Step 2) estimating a first expected fuel consumption in time, based on said first, second and third set of input parameters,
- (Step 3) a second acquisition of a measured fuel consumption in time,
- (Step 4) comparing, preferably in real time, said expected fuel consumption with said measured fuel consumption, thereby obtaining an error value in time,
- (Step 5) checking: whether said error value increases abruptly (5 = Yes), if so
- (Step 6) activating a flag indicating an extra-fuel consumption condition;
said method further comprising performing the following steps in succession when said flag is active:
- (Step 7) acquiring a fourth set of input parameters related to stored records relating to events concerning abnormalities and variations in the operating conditions of the engine and/or vehicle,
- (Step 8) checking: whether at least one record is present, then
- (Step 9) the instant of memorization of said record (of each of said records) is compared with said activation of said first flag so as to identify a cause-effect relation between the memorized abnormality (abnormalities) or variation (variations) of use conditions and said error increase;
said stored records including:
- the error messages (DTC) relating to an engine and/or the vehicle, which are posted in a vehicle data network and stored in an engine control processing unit and/or the vehicle control processing unit; and
- the detection of an exceedance of a minimum tyre pressure threshold, a disconnection and reconnection of the trailer, an activation of a power take-off (PTO).

2. The method according to claim 1, comprising the following steps carried out in succession, possibly, parallelly to and independently of said steps 7 to 9 of claim 1:
- (Step 7') acquiring a fifth set of input parameters related to an ideal vehicle use;
- (Step 2') estimating a second expected fuel consumption in time, based on said first, second and fifth set of input parameters;
- (Step 9') carrying out a comparison between said first and said second expected fuel consumption and if there is an offset greater than a predetermined threshold, then a cause of extra-fuel consumption is identified as an incorrect vehicle use.

3. The method according to claim 2, wherein said step of activating said flag includes a step of showing, to a driver of said vehicle, a percentage offset between the expected consumption and the measured consumption, quantifying it preferably in terms of percentages or in terms of litres/100km.

4. The method according to claim 3, wherein an abnormality or variation of operating conditions of the vehicle, that has caused said offset, is also shown together with said offset.

5. The method according to claim 4, wherein said step (Step 9') of carrying out said comparison further comprises a step of showing, to the driver of the vehicle, a notice message, which includes an extra-fuel consumption value expressed either in percentages or in terms of litres/100km which includes an indication on an incorrect driving style.

6. The method according to claim 5, wherein said indication specifies at least one of the following causes:
- an insufficient average time of use of the cruise control,
- low score on the driving style,
- both positive and negative excessive acceleration of the vehicle,
- excessive use of the brakes,
- insufficient use of the Stop&Start, etc.

7. A network infrastructure comprising
- a processing unit (VCU) installed on board a vehicle configured to provide said first, second and third set of parameters and a measured fuel consumption according to claim 1, wherein said first set of parameters includes a geographical position of the vehicle;
- a first remote server configured to provide topographic information and information on meteorological and traffic conditions in relation to an acquired geographical position;
- a database containing information concerning specifications of at least said vehicle;
- a second remote server configured to acquire from said processing unit, said first, second and third set of parameters and to request and obtain from said first server, said topographic information and information on meteorological and traffic conditions in relation to an acquired and provided geographical position, wherein said second server is also configured to access said database for obtaining said specifications of said vehicle and configured to carry out all the steps of any one of the claims 1 to 6.

8. A computer program that comprises instructions which, when the program is executed by the network architecture of claim 7, causes the network infrastructure to carry out all the steps of any one of the claims 1 to 6.

9. A computer-readable medium having stored thereon the computer program of claim 8.

## Patentansprüche

1. Verfahren zur Überwachung eines übermäßigen Kraftstoffverbrauchs und zur Bestimmung einer Ursache für einen übermäßigen Kraftstoffverbrauch eines Landfahrzeugs, insbesondere eines Nutzfahrzeugs oder Industriefahrzeugs, umfassend zumindest die folgenden aufeinanderfolgenden Schritte:
- (Schritt 1) eine erste Ermittlung zumindest
• eines ersten Satzes von Eingangsparametern, bezogen auf Umwelt- und Fahrtbedingungen,
• eines zweiten Satzes von Eingangsparametern, bezogen auf Fahrzeugspezifikationen, und
• eines dritten Satzes von Eingangsparametern, bezogen auf einen Fahrzeug-Fahrstil;
wobei der Fahrzeug-"Fahrstil" Bedingungen bezeichnet, unter welchen das Fahrzeug vom Fahrer benutzt wird, sowohl negative als auch positive Beschleunigungen, denen das Fahrzeug ausgesetzt wird, die Häufigkeit der Benutzung der Bremsen, der Benutzung der Geschwindigkeitsregelung, und der optionalen Benutzung des Stopp-/Start-Systems;
- (Schritt 2) Schätzung eines ersten erwarteten Kraftstoffverbrauchs pro Zeit, basierend auf dem ersten, zweiten und dritten Satz von Eingangsparametern,
- (Schritt 3) eine zweite Ermittlung eines gemessenen Kraftstoffverbrauchs pro Zeit,
- (Schritt 4) Vergleichen, vorzugsweise in Echtzeit, des erwarteten Kraftstoffverbrauchs mit dem gemessenen Kraftstoffverbrauch, und hierdurch Ermittlung eines Fehlerwerts pro Zeit,
- (Schritt 5) Prüfung, ob der Fehlerwert abrupt ansteigt (5 = ja), und falls dies der Fall ist,
- (Schritt 6) Aktivierung eines Anzeigers, der einen Zustand eines übermäßigen Kraftstoffverbrauchs anzeigt,
welches Verfahren ferner die Durchführung der folgenden aufeinanderfolgenden Schritte umfasst, falls der Anzeiger aktiviert ist:
- (Schritt 7) Ermittlung eines vierten Satzes von Eingangsparametern, bezogen auf gespeicherte Datensätze, die sich auf Ereignisse beziehen, die Unregelmäßigkeiten und Abweichungen in den Betriebsbedingungen des Motors und/oder des Fahrzeugs betreffen,
- (Schritt 8) Prüfung, ob zumindest ein Datensatz vorhanden ist, dann
- (Schritt 9) wird der Moment der Speicherung des Datensatzes (für jeden Datensatz) mit der Aktivierung des ersten Anzeigers verglichen, um eine Ursache-Wirkungs-Beziehung zwischen der gespeicherten Unregelmäßigkeit (den Unregelmäßigkeiten) oder der Abweichung (den Abweichungen) der Benutzungsbedingungen und dem Fehlerzuwachs zu identifizieren;
wobei die gespeicherten Datensätze folgendes umfassen:
- die Fehlermeldungen (DTC), die sich auf einen Motor und/oder das Fahrzeug beziehen, welche in einem Fahrzeugdatennetzwerk gesendet werden und in einer Motorsteuerungsverarbeitungseinheit und/oder der Fahrzeugsteuerungsverarbeitungseinheit gespeichert sind; und
- die Detektion eines Überschreitens einer minimalen Reifendruckschwelle, eines Verbindens oder Lösens des Anhängers, eine Aktivierung eines Nebenabtriebs (PTO).

2. Verfahren gemäß Anspruch 1, umfassend die folgenden Schritte, die aufeinanderfolgend ausgeführt werden, nach Möglichkeit parallel und unabhängig von den Schritten 7 bis 9 des Anspruchs 1:
- (Schritt 7') Ermittlung eines fünften Satzes von Eingangsparametern, bezogen auf eine ideale Fahrzeugbenutzung;
- (Schritt 2') Schätzung eines zweiten übermäßigen Kraftstoffverbrauchs pro Zeit, basierend auf dem ersten, zweiten und fünften Satz von Eingangsparametern,
- (Schritt 9') Durchführung eines Vergleichs zwischen Kraftstoffverbrauch, und falls eine Abweichung besteht, die größer ist als eine vorbestimmte Schwelle, dann wird eine Ursache des übermäßigen Kraftstoffverbrauchs als eine unkorrekte Fahrzeugnutzung identifiziert.

3. Verfahren gemäß Anspruch 2, bei welchem der Schritt der Aktivierung des Anzeigers einen Schritt umfasst, in welchem dem Fahrer des Fahrzeugs eine prozentuale Abweichung zwischen dem erwarteten Verbrauch und dem gemessenen Verbrauch angezeigt wird, bemessen vorzugsweise in Prozentsätzen oder als Liter/100km.

4. Verfahren gemäß Anspruch 3, bei welchem eine Unregelmäßigkeit oder Schwankung der Betriebsbedingungen des Fahrzeugs, die die Abweichung verursacht haben, ebenfalls zusammen mit der Abweichung angezeigt werden.

5. Verfahren gemäß Anspruch 4, bei welchem der Schritt (Schritt 9') der Durchführung des Vergleichs ferner einen Schritt umfasst, in welchem dem Fahrer des Fahrzeugs eine Nachricht angezeigt wird, welche einen übermäßigen Kraftstoffverbrauch umfasst, ausgedrückt entweder in Prozentsätzen oder als Liter/100km, welches eine Anzeige eines inkorrekten Fahrstils umfasst.

6. Verfahren gemäß Anspruch 5, bei welchem die Anzeige zumindest eine der folgenden Ursachen spezifiziert:
- eine unzureichende Durchschnittszeit der Verwendung der Geschwindigkeitsregelung,
- niedrige Bewertung des Fahrstils,
- sowohl positive als auch negative übermäßige Beschleunigung des Fahrzeugs,
- übermäßige Benutzung der Bremsen,
- unzureichende Benutzung des Start-/Stopp-Systems, usw..

7. Netzwerk-Infrastruktur, umfassend:
- eine Verarbeitungseinheit (VCU), installiert an Bord des Fahrzeugs, ausgebildet zur Bereitstellung des ersten, zweiten und dritten Satzes von Parametern und eines gemessenen Kraftstoffverbrauchs gemäß Anspruch 1, wobei der erste Satz von Parametern eine geographische Position des Fahrzeugs umfasst,
- einen ersten Remote-Server, ausgebildet zur Bereitstellung topographischer Informationen und Informationen über meteorologische Bedingungen und Verkehrsbedingungen in Bezug auf eine ermittelte geographische Position;
- eine Datenbank, enthaltend Informationen bezüglich Spezifikationen des zumindest einen Fahrzeugs,
- einen zweiten Remote-Server, dazu ausgebildet, von der ersten Verarbeitungseinheit in ersten, zweiten und dritten Satz von Parametern zu erlangen und von dem ersten Server die topographischen Informationen und Informationen bezüglich meteorologischer Bedingungen und Verkehrsbedingungen in Bezug auf eine ermittelte und bereitgestellte geographische Position abzufragen und zu erhalten, wobei der zweite Server ebenfalls dazu ausgebildet ist, auf die Datenbank zum Erhalt der Spezifikationen des Fahrzeugs zuzugreifen, und welcher dazu ausgebildet ist, alle Schritte aus einem der Ansprüche 1 bis 6 auszuführen.

8. Computerprogramm, welches Befehle umfasst, welche dann, wenn das Programm durch die Netzwerkarchitektur gemäß Anspruch 7 ausgeführt wird, die Netzwerkinfrastruktur dazu veranlasst, alle Schritte aus einem der Ansprüche 1 bis 6 auszuführen.

9. Computerlesbares Medium, auf welchem das Computerprogramm aus Anspruch 8 gespeichert ist.

## Revendications

1. Méthode pour surveiller une surconsommation de carburant et pour déterminer une cause d'une surconsommation de carburant d'un véhicule terrestre, en particulier un véhicule commercial ou industriel, comprenant au moins les étapes suivantes les unes après les autres :
- (Étape 1) une première acquisition d'au moins
. un premier ensemble de paramètres d'entrée liés à des conditions environnementales et de mission,
. un deuxième ensemble de paramètres d'entrée liés à des spécifications de véhicule et
. un troisième ensemble de paramètres d'entrée liés à un style de conduite de véhicule ;
ledit « style de conduite » de véhicule signifiant les conditions dans lesquelles le véhicule est utilisé par le conducteur, à la fois les accélérations négatives et positives appliquées au véhicule, la fréquence d'utilisation des freins, l'utilisation du régulateur de vitesse, l'utilisation optionnelle de la mise en veille ;
- (Étape 2) estimation d'une première consommation de carburant attendue dans le temps, sur la base desdits premier, deuxième et troisième ensembles de paramètres d'entrée,
- (Étape 3) une seconde acquisition d'une consommation de carburant mesurée dans le temps,
- (Étape 4) comparaison, de préférence en temps réel, de ladite consommation de carburant attendue avec ladite consommation de carburant mesurée, obtenant ainsi une valeur d'erreur dans le temps,
- (Étape 5) vérification : si ladite valeur d'erreur augmente brusquement (5 - Oui), si tel est le cas
- (Étape 6) activation d'un drapeau indiquant une condition de surconsommation de carburant ;
ladite méthode comprenant en outre la mise en application des étapes suivantes les unes après les autres lorsque ledit drapeau est actif :
- (Étape 7) acquisition d'un quatrième ensemble de paramètres d'entrée liés à des enregistrements stockés se rapportant à des événements concernant des anomalies et des variations dans les conditions de fonctionnement du moteur et/ou du véhicule,
- (Étape 8) vérification : si au moins un enregistrement est présent, alors
- (Étape 9) l'instant de mémorisation dudit enregistrement (de chacun desdits enregistrements) est comparé avec ladite activation dudit premier drapeau de manière à identifier une relation de cause à effet entre l'anomalie (les anomalies) ou la variation (les variations) mémorisées de conditions d'utilisation et ladite augmentation d'erreur ;
lesdits enregistrements stockés comportant :
- les messages d'erreur (DTC) se rapportant à un moteur et/ou au véhicule, qui sont postés dans un réseau de données de véhicule et stockés dans une unité de traitement de commande de moteur et/ou l'unité de traitement de commande de véhicule ; et
- la détection d'un dépassement d'un seuil de pression de pneus minimal, d'un décrochage et d'un raccrochage de la remorque, d'une activation d'une prise de mouvement (PTO).

2. Méthode selon la revendication 1, comprenant les étapes suivantes réalisées les unes après les autres, éventuellement, parallèlement auxdites et indépendamment desdites étapes 7 à 9 de la revendication 1 :
- (Étape 7') activation d'un cinquième ensemble de paramètres d'entrée liés à une utilisation de véhicule idéale ;
- (Étape 2') estimation d'une seconde consommation de carburant attendue dans le temps, sur la base desdits premier, deuxième et cinquième ensembles de paramètres d'entrée ;
- (Étape 9') réalisation d'une comparaison entre ladite première et ladite seconde consommation de carburant attendue et s'il y a un décalage supérieur à un seuil prédéterminé, alors une cause de surconsommation de carburant est identifiée comme une utilisation de véhicule incorrecte.

3. Méthode selon la revendication 2, dans laquelle ladite étape consistant à activer ledit drapeau comporte une étape consistant à montrer, à un conducteur dudit véhicule, un décalage en pourcentage entre la consommation attendue et la consommation mesurée, en la quantifiant de préférence en termes de pourcentages ou en termes de litres/100 km.

4. Méthode selon la revendication 3, dans laquelle une anomalie ou une variation de conditions de fonctionnement du véhicule, qui a causé ledit décalage, est également montrée conjointement avec ledit décalage.

5. Méthode selon la revendication 4, dans laquelle ladite étape (Étape 9') consistant à réaliser ladite comparaison comprend en outre une étape consistant à montrer, au conducteur du véhicule, un message d'avertissement, qui comporte une valeur de surconsommation de carburant exprimée soit en pourcentages ou en termes de litres/100 km qui comporte une indication d'un style de conduite incorrect.

6. Méthode selon la revendication 5, dans laquelle ladite indication spécifie au moins une des causes suivantes :
- un temps moyen insuffisant d'utilisation du régulateur de vitesse,
- un faible score sur le style de conduite,
- à la fois une accélération positive et négative excessive du véhicule,
- une utilisation excessive des freins,
- une utilisation insuffisante de la mise en veille, etc.

7. Infrastructure de réseau comprenant
- une unité de traitement (VCU) installée à bord d'un véhicule configurée pour fournir lesdits premier, deuxième et troisième ensembles de paramètres et une consommation de carburant mesurée selon la revendication 1, dans laquelle ledit premier ensemble de paramètres comporte une position géographique du véhicule ;
- un premier serveur distant configuré pour fournir des informations topographiques et des informations sur des conditions météorologiques et de circulation en rapport avec une position géographique acquise ;
- une base de données contenant des informations concernant des spécifications d'au moins ledit véhicule ;
- un second serveur distant configuré pour acquérir à partir de ladite unité de traitement lesdits premier, deuxième et troisième ensembles de paramètres et pour demander et obtenir à partir dudit premier serveur lesdites informations topographiques et lesdites informations sur des conditions météorologiques et de circulation en rapport avec une position géographique acquise et fournie, dans laquelle ledit second serveur est également configuré pour accéder à ladite base de données pour obtenir lesdites spécifications dudit véhicule et configuré pour réaliser toutes les étapes de l'une quelconque des revendications 1 à 6.

8. Programme d'ordinateur qui comprend des instructions qui, lorsque le programme est exécuté par l'architecture de réseau selon la revendication 7, amène l'infrastructure de réseau à réaliser toutes les étapes de l'une quelconque des revendications 1 à 6.

9. Support lisible par ordinateur ayant stocké sur celui-ci le programme d'ordinateur selon la revendication 8.
